# FASCICULE DE BREVET EUROPEEN

(11) **EP 1 922 256 B1**
(45) Date de publication et mention de la délivrance du brevet: **09.12.2009**
(21) Numéro de dépôt: 06794308.4
(22) Date de dépôt: 08.08.2006
(51) Int. Cl.: B65D 23/10, B29C 49/50, B29C 65/18, B29C 65/74, B29C 35/02, B29C 35/16, B29C 49/10, B29C 49/36

(54) **MOULE, PROCEDE ET INSTALLATION POUR LA FABRICATION PAR SOUFFLAGE DES RECIPIENTS THERMOPLASTIQUES MUNIS D'UNE POIGNEE INTEGRALE**
FORM, VERFAHREN UND ANLAGE FÜR DIE BLASFORMHERSTELLUNG VON THERMOPLASTIKBEHÄLTERN MIT EINEM INTEGRIERTEN GRIFF
MOULD, METHOD AND INSTALLATION FOR THE BLOW-MOULDING PRODUCTION OF THERMOPLASTIC CONTAINERS WHICH ARE EQUIPPED WITH AN INTEGRAL HANDLE

(30) Priorité: 18.08.2005 FR 0508604
(43) Date de publication de la demande: 21.05.2008
(73) Titulaire: Sidel Participations, 76930 Octeville Sur Mer (FR)
(72) Inventeur: JACSON, Olivier, F-76930 Octeville-Sur-Mer (FR); MICHELET, Marc, F-76930 Octeville-Sur-Mer (FR)
(74) Mandataire: Cabinet Plasseraud
(86) Numéro de dépôt international: PCT/FR2006/001924
(87) Numéro de publication internationale: WO 2007/020346

(56) Documents cités:
- EP-A- 0 346 518
- US-A1- 2003 102 605
- US-A1- 2004 245 678
- PATENT ABSTRACTS OF JAPAN vol. 1997, no. 04, 30 avril 1997 (1997-04-30) -& JP 08 323845 A (NISSEI ASB MACH CO LTD), 10 décembre 1996 (1996-12-10)

## Description

La présente invention concerne des perfectionnements apportés dans le domaine de la fabrication, par soufflage ou étirage-soufflage de préformes chauffées, de récipients en matière thermoplastique, notamment une polyoléfine telle que du polypropylène, munis d'une poignée intégrale, et elle concerne plus précisément un moule de soufflage pour la fabrication de tels récipients, ledit moule comprenant au moins deux demi-moules
- mobiles l'un par rapport à l'autre,
- possédant des faces respectives de contact mutuel définissant, en position de fermeture, un plan de joint,
- possédant respectivement deux empreintes qui, réunies, définissent une cavité de moulage du corps et de l'épaule du récipient final, et
- comportant respectivement deux logements qui sont sensiblement perpendiculaires auxdites faces respectives de contact et sensiblement mutuellement alignés dans la position de fermeture du moule et qui renferment deux inserts respectifs formant pistons mobiles pneumatiquement entre
   . une position effacée dans laquelle les deux inserts sont rentrés au moins en majeure partie dans leurs logements respectifs et
   . une position sortie dans laquelle les deux inserts sont repoussés en direction l'un de l'autre en pinçant deux zones déterminées de paroi du corps du récipient jusqu'à mettre au contact l'une de l'autre lesdites deux zones de paroi du corps qui sont alors soudées thermiquement l'une à l'autre.

On connaît déjà divers moules ainsi agencés aux fins de fabrication des récipients précités (voir par exemple les documents FR 2 292 573, EP 0 346 518, EP 1 169 231, US 6 733 716).

L'invention a essentiellement pour but de proposer un tel moule qui soit plus performant que les moules actuellement connus et qui permette de produire des récipients à poignée intégrale avec une cadence élevée (typiquement de l'ordre de 1500 récipients par heure) comparable à la cadence de production de récipients thermoplastiques de même capacité non pourvus de poignée.

A ces fins, selon un premier de ses aspects, l'invention propose un moule tel que mentionné au préambule qui se caractérise, étant agencé selon l'invention, en ce que chaque insert comprend deux pistons emboîtés l'un dans l'autre de façon télescopique, à savoir un piston principal ou piston de poussée ayant une face frontale de poussée située centralement et, logé dans ledit piston principal, un piston secondaire ou piston de soudage disposé coaxialement et ayant une face frontale entourant ladite face frontale du piston principal selon un contour fermé coïncidant avec la périphérie de ladite zone de paroi du corps du récipient, des moyens de chauffage étant prévus pour maintenir au moins ladite face frontale du piston secondaire à la température de ramollissement de la matière thermoplastique, les deux pistons principal et secondaire étant agencés de manière telle que
- dans une première phase de fonctionnement, le piston principal est déplacé de sa position effacée vers sa position saillante tandis que le piston secondaire reste effacé dans ledit piston principal, la face frontale dudit piston principal repoussant ladite zone déterminée de la paroi du corps du récipient, et
- dans une seconde phase de fonctionnement, le piston secondaire est déplacé par rapport au piston principal de sa position effacée vers sa position saillante de sorte que sa face frontale chaude vienne en appui contre la périphérie de ladite zone de paroi du corps du récipient pour en ramollir la matière, la souder périphériquement de façon étanche avec la zone de paroi repoussée par le piston en regard et au moins prémarquer le pourtour de cette zone de paroi.

Grâce à cet agencement, on distingue la phase de repoussage de la matière (ou « boxage ») avec des pièces relativement peu chaudes et une phase de soudage très brève avec des pièces très chaudes qui, compte tenu de la forme en couteaux donnée à ces pièces, permet de désolidariser aisément le flan central en fin de cycle ou ultérieurement. Il en résulte la possibilité d'une durée de formation de la poignée qui est très brève (typiquement de l'ordre de 0,6 s) qui ne grève pas de façon trop pénalisante la durée du cycle de fabrication (typiquement de l'ordre de 3 s).

Dans un mode de réalisation préféré, on prévoit que chaque insert comprend en outre :
- au moins un canal principal d'alimentation en gaz sous pression débouchant dans une chambre dudit logement pour repousser ledit piston principal dans sa position saillante,
- des moyens de rappel du piston principal de sa position saillante vers sa position effacée,
- au moins un canal secondaire d'alimentation en gaz sous pression débouchant dans le fond dudit évidement pour repousser ledit piston secondaire dans sa position saillante,
- des moyens de rappel du piston secondaire de sa position saillante vers sa position effacée, et
- des moyens de commande agencés de manière à alimenter en gaz sous pression sélectivement d'abord le canal principal de manière à déplacer le piston principal avec le piston secondaire en position effacée dans la susdite première phase de fonctionnement, puis le canal secondaire de manière à déplacer le piston secondaire dans la susdite seconde phase de fonctionnement.

Un tel agencement autorise le fonctionnement des moyens conformes à l'invention à partir du gaz sous basse pression (typiquement de l'air à une pression de l'ordre de 7x10⁵ Pa) qui est couramment disponible dans les machines de soufflage.

De façon simple, le canal secondaire peut comprendre au moins un conduit calibré s'étendant dans le piston principal entre sa face d'extrémité tournée vers la chambre du logement et sa face d'extrémité constituant le fond du susdit évidement abritant le piston secondaire, ce grâce à quoi, lorsque le premier piston parvient en butée dans sa position saillante, le gaz sous pression alimenté dans le logement passe, à travers le conduit calibré, dans l'évidement pour repousser le second piston vers sa position saillante ; avantageusement, pour obtenir un fonctionnement équilibré des pièces en mouvement, le canal secondaire comprend plusieurs conduits calibrés répartis sur le pourtour du piston principal.

Dans un exemple de réalisation préféré, la face frontale de poussée du piston principal appartient à une plaque frontale située centralement et supportée par une tige axiale solidaire du piston principal et le piston secondaire est évidé centralement et entoure ladite tige.

Dans un exemple de réalisation simple à mettre en oeuvre, les moyens de chauffage sont propres à chauffer le piston secondaire et comprennent au moins une cartouche chauffante électrique logée dans un alésage respectif du piston secondaire ; de préférence alors, les moyens de chauffage comprennent plusieurs cartouches chauffantes électriques logées dans des alésages respectifs répartis sur le pourtour du piston secondaire.

Pour un fonctionnement correct du moule, il convient que le piston principal qui assure le repoussage de la zone de paroi du corps du récipient reste à une température peu élevée, et cela malgré la présence du piston secondaire qui est porté en permanence à une température élevée. A cette fin, pour découpler thermiquement les deux pistons principal et secondaire, on prévoit qu'un gaz de refroidissement est insufflé entre le piston principal et le piston secondaire pour maintenir le piston principal à une température sensiblement inférieure à la température de ramollissement de la matière thermoplastique. On obtient ainsi que le piston principal reste à une température comprise entre 50°C et 100°C tandis que le piston secondaire est porté à une température supérieure à celle du piston principal dans un intervalle compris entre 130°C et 200°C, avantageusement entre 150°C et 190°C.

Dans un mode de réalisation préféré, la face frontale du piston secondaire est conformée en couteau s'étendant selon le susdit contour fermé, de manière à faciliter le prémarquage, voire la découpe du flan central dégageant l'évidement de la poignée.

De façon intéressante, les moyens de rappel du piston principal de sa position saillante vers sa position effacée sont des moyens pneumatiques, le piston principal et son logement étant agencés pour constituer un vérin à double effet.

Toujours de façon intéressante, les moyens de rappel du piston secondaire comprennent au moins un ressort de rappel interposé entre le piston principal et le piston secondaire.

L'invention peut trouver une application intéressante dans une installation tournante de moulage pour la fabrication, par soufflage ou étirage-soufflage de préformes chauffées, de récipients en matière thermoplastique munis d'une poignée intégrale, ladite installation comportant un carrousel tournant équipé d'une multiplicité de moules répartis sur son pourtour, et étant caractérisée par le fait que les moules sont agencés comme exposé plus haut.

L'invention peut également trouver une application intéressante dans une installation fixe de moulage pour la fabrication, par soufflage ou étirage-soufflage de préformes chauffées, de récipients en matière thermoplastique munis d'une poignée intégrale, ladite installation comportant plusieurs moules supportés de façon fixe sensiblement en ligne, et étant caractérisée par le fait que les moules sont agencés comme exposé plus haut.

Selon un autre de ses aspects, l'invention propose un procédé pour la fabrication, par soufflage ou étirage-soufflage d'une préforme chauffée, d'un récipient en matière thermoplastique, notamment une polyoléfine telle que du polypropylène, munis d'une poignée intégrale à l'aide d'un moule comprenant au moins deux demi-moules
- mobiles l'un par rapport à l'autre,
- possédant des faces respectives de contact mutuel définissant, en position de fermeture, un plan de joint,
- possédant respectivement deux empreintes qui, réunies, définissent une cavité de moulage du corps et de l'épaule du récipient final, et
- comportant respectivement deux logements qui sont sensiblement perpendiculaires auxdites face respectives de contact et sensiblement mutuellement alignés dans la position de fermeture du moule et qui renferment deux inserts respectifs formant pistons mobiles pneumatiquement entre
   . une position effacée dans laquelle les deux inserts sont rentrés au moins en majeure partie dans leurs logements respectifs et
   . une position sortie dans laquelle les deux inserts sont repoussés en direction l'un de l'autre en pinçant deux zones déterminées de paroi du corps du récipient jusqu'à mettre au contact l'une de l'autre lesdites deux zones de paroi du corps qui sont alors soudées thermiquement l'une à l'autre,
   lequel procédé se caractérise selon l'invention
   en ce qu'on constitue chaque insert avec deux pistons emboîtés l'un dans l'autre de façon télescopique, à savoir un piston principal ou piston de poussée ayant une face frontale de poussée située centralement et, logé dans ledit piston principal, un piston secondaire ou piston de soudage disposé coaxialement et ayant une face frontale entourant ladite face frontale du piston principal selon un contour fermé coïncidant avec la périphérie de ladite zone de paroi du corps du récipient,
   en ce qu'on prévoit des moyens de chauffage pour maintenir au moins ladite face frontale du piston secondaire à la température de ramollissement de la matière thermoplastique, et
   en ce qu'on agence les deux pistons principal et secondaire de manière telle que
- dans une première phase de fonctionnement, on déplace le piston principal de sa position effacée vers sa position saillante tandis qu'on maintient le piston secondaire effacé dans ledit piston principal, la face frontale dudit piston principal repoussant ladite zone déterminée de la paroi du corps du récipient, et
- dans une seconde phase de fonctionnement, on déplace le piston secondaire par rapport au piston principal de sa position effacée vers sa position saillante de sorte que sa face frontale chaude vienne en appui contre la périphérie de ladite zone de paroi du corps du récipient pour en ramollir la matière, la souder périphériquement avec la portion de paroi repoussée par le piston en regard et au moins prémarquer le pourtour de cette zone de paroi.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :
- les figures 1A, 1B et 1C sont des représentations schématiques d'un moule de soufflage agencé conformément à l'invention, montré respectivement en vue de dessus en coupe dans trois positions fonctionnelles différentes ;
- la figure 2 est une vue de face d'un demi-moule agencé conformément à l'invention ;
- la figure 3 est une vue en coupe selon la ligne III-III du moule de la figure 2 ;
- la figure 4 est une vue éclatée de côté, en coupe, de trois pièces composantes principales d'un insert du moule des figures 2 et 3 ;
- les figures 5 et 6 sont des vues de dessous et la figure 7 est une vue de dessus respectivement des trois pièces représentées à la figure 4 ;
- la figure 8 est une vue à échelle agrandie d'une partie de la pièce de la figure 4 montrée en vue de dessous à la figure 6 ; et
- les figures 9A à 9C sont des vues à échelle agrandie et en coupe d'un insert du moule des figures 2 et 3 montré respectivement dans trois positions fonctionnelles.

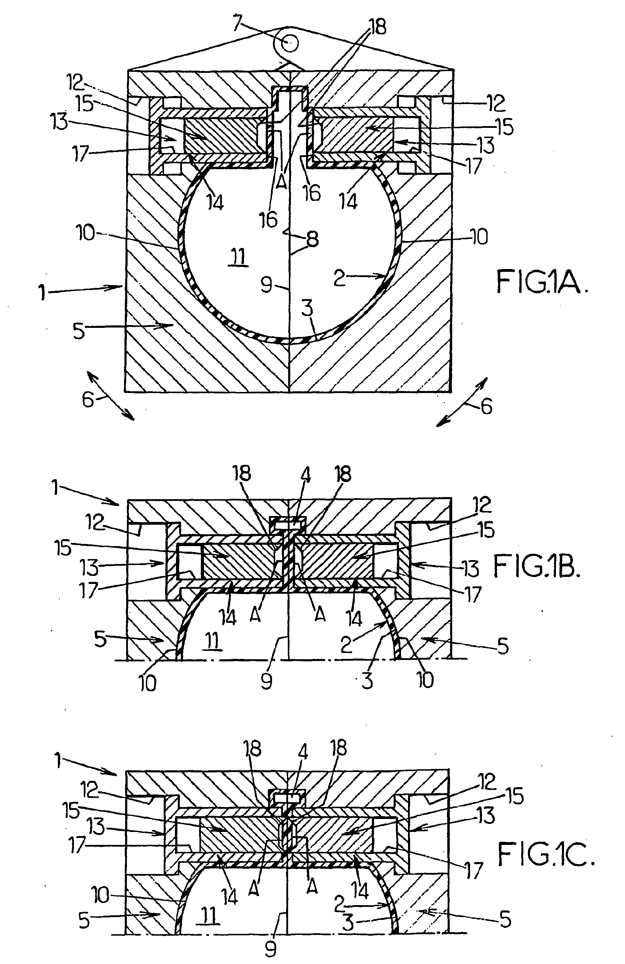

On se reporte maintenant tout d'abord aux figures 1A à 1C sur lesquelles est représenté en coupe transversale (complète à la figure 1A et partielles aux figures 1B et 1C) un moule 1 pour la fabrication, par soufflage ou étirage-soufflage d'une préforme chauffée, d'un récipient 2 en matière thermoplastique, dont seul est visible le corps 3 muni d'une poignée intégrale 4 (visible sur la figure 1C).

Le moule 1, dans la représentation simplifiée donnée aux figures 1A à 1C, comprend au moins deux demi-moules 5 (en général complétés par un fond de moule mobile axialement, non visible).

Les demi-moules 5 sont mobiles l'un par rapport à l'autre, notamment en rotation (flèches 6) autour d'un axe de pivotement commun schématisé en 7.

Les demi-moules 5 possèdent des faces 8 respectives de contact mutuel définissant, en position de fermeture, un plan de joint 9.

Les demi-moules 5 possèdent respectivement deux empreintes 10 qui, réunies lorsque le moule est en position de fermeture, définissent une cavité 11 de moulage du corps 3 et de l'épaule du récipient 2.

Enfin, les demi-moules 5 comportent respectivement deux logements 12 qui sont sensiblement perpendiculaires auxdites faces 8 respectives de contact et sensiblement mutuellement alignés dans la position de fermeture du moule et qui renferment deux inserts 13 respectifs formant des équipages mobiles pneumatiquement entre une position effacée (figure 1A) dans laquelle les deux inserts sont rentrés au moins en majeure partie dans leurs logements 12 respectifs et une position sortie (figures 1B, 1C) dont il sera plus explicitement question plus loin.

Pour le reste, le moule 1 peut être aménagé de toute façon appropriée, en relation avec les exigences entraînées par la formation de la poignée intégrale.

Dans le cadre de la présente invention, on prévoit que chaque insert 13 comprend deux pistons respectivement 14 et 15 emboîtés l'un dans l'autre de façon télescopique, à savoir un piston principal ou piston de poussée 14 et un piston secondaire ou piston de soudage 15, qui, dans le contexte de l'agencement général du moule, sont tous deux actionnés pneumatiquement.

Le piston principal ou piston de poussée (ou piston de « boxage ») 14 est reçu dans un des logements 12 précités et possède une face 16 frontale de poussée.

Le piston secondaire ou piston de soudage 15 est disposé coaxialement dans un alésage 17 axial du piston principal 14 et possède une face 18 frontale s'étendant transversalement selon un contour fermé coïncidant avec la périphérie d'une zone A déterminée de paroi du corps 3 du récipient 2. Au surplus, cette face 18 frontale du piston secondaire 15 est conformée avec une extrémité frontale fine de manière à constituer un couteau s'étendant selon le susdit contour fermé. Des moyens de chauffage (non montrés) sont prévus pour maintenir au moins ladite face 18 frontale du piston secondaire 15 à la température de ramollissement de la matière thermoplastique.

Le fonctionnement des moyens qui viennent d'être décrits est le suivant.

Dans la position de repos illustrée à la figure 1A, les pistons secondaires 15 sont effacés dans les alésages 17 des pistons principaux 14 respectifs, et les pistons principaux 14 sont eux-mêmes effacés dans les logements 12 respectifs des demi-moules 5. Dans le cas où le corps 3 du récipient à fabriquer possède une courbure sensible dans la zone où doit être formée la poignée comme c'est le cas illustré à la figure 1A, les pistons principaux 14 ne peuvent pas être effacés en totalité à l'intérieur des logements 12 respectifs et leur extrémité frontale dépasse en partie dans la cavité 11 du moule 1 comme visible à la figure 1A.

Dans une première phase de fonctionnement, illustrée à la figure 1B, qui peut commencer en même temps que la phase finale de soufflage du récipient (soufflage sous haute pression - typiquement sous une pression de l'ordre de 40x10⁵ Pa - succédant à une phase d'étirage et de présoufflage sous une pression moindre), les pistons principaux 14 sont déplacés en direction l'un de l'autre de leur position effacée vers leur position saillante tandis que les pistons secondaires 15 restent effacés dans lesdits pistons principaux 14 respectifs. Au cours de ce mouvement, les faces 16 frontales respectives desdits pistons principaux 15 repoussent les portions A déterminées situées symétriquement de part et d'autre du plan de joint 9. Finalement, les deux zones A de paroi sont amenées au contact l'une de l'autre le long du plan de joint 9, comme visible à la figure 1B, sous les actions de poussée respectives des deux pistons principaux 14 déplacés conjointement en direction l'un de l'autre.

Dans une seconde phase, terminale, de fonctionnement illustrée à la figure 1C, les pistons secondaires 15 sont déplacés en direction l'un de l'autre par rapport aux pistons principaux 14 respectifs de leur position effacée vers leur position saillante. Ainsi, les faces 18 frontales chaudes respectives de ces deux pistons secondaires 15 viennent en appui contre la périphérie desdites zones A de paroi du corps 3 du récipient 2 pour en ramollir la matière et les souder périphériquement de façon étanche l'une à l'autre comme montré à la figure 1C. En même temps, du fait de leur conformation en couteaux, les faces 18 frontales entament la matière thermoplastique ramollie et sectionnent, ou à tout le moins prémarquent en vue d'un sectionnement ultérieur, le flan, formé par la double zone A de paroi, situé à l'intérieur de la susdite périphérie.

Pour que le fonctionnement qui vient d'être exposé puisse être assuré comme prévu, il est avantageux que chaque insert 13 comprenne en outre :
- au moins un canal principal (non visible) d'alimentation en gaz sous pression débouchant dans le fond ou chambre dudit logement 12 pour repousser ledit piston principal 14 dans sa position saillante,
- des moyens de rappel du piston principal 14 de sa position saillante vers sa position effacée, lesdits moyens de rappel pouvant être de divers types (ressorts de rappel, piston principal 14 et logement 12 agencés pour constituer un vérin à double effet),
- au moins un canal secondaire (non visible) d'alimentation en gaz sous pression débouchant dans le fond dudit évidement 17 pour repousser ledit piston secondaire 15 dans sa position saillante,
- des moyens de rappel du piston secondaire 15 de sa position saillante vers sa position effacée, lesdits moyens de rappel pouvant être de divers types (ressorts de rappel, piston principal 15 et évidement 17 agencés pour constituer un vérin à double effet), et
- des moyens de commande agencés de manière à alimenter en gaz sous pression sélectivement d'abord le canal principal de manière à déplacer le piston principal 14 avec le piston secondaire 15 demeurant en position effacée au cours de la susdite première phase de fonctionnement, puis le canal secondaire de manière à déplacer le piston secondaire 15 au cours de la susdite seconde phase de fonctionnement.

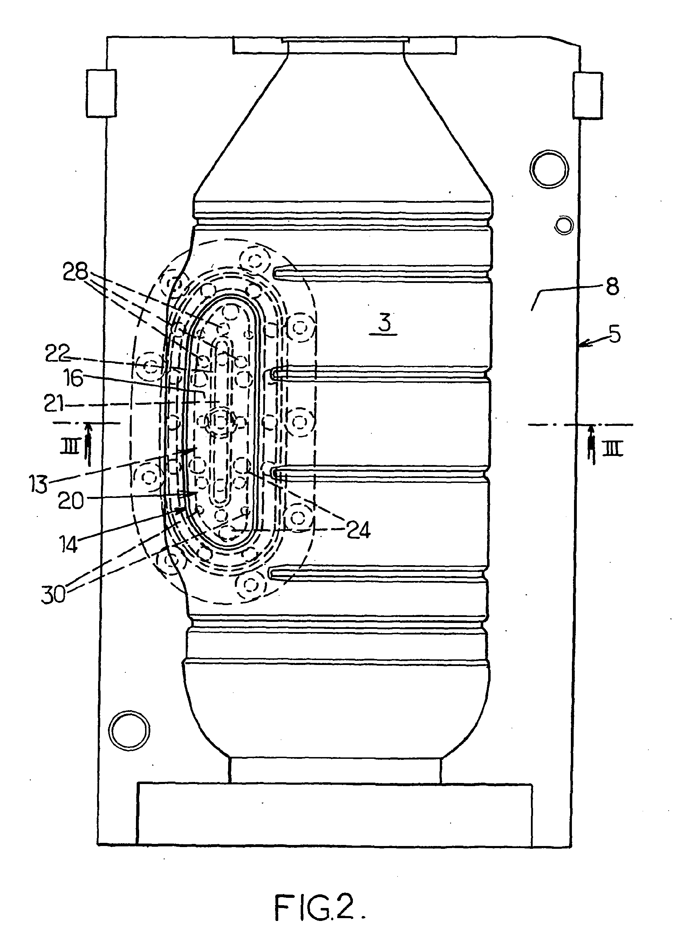

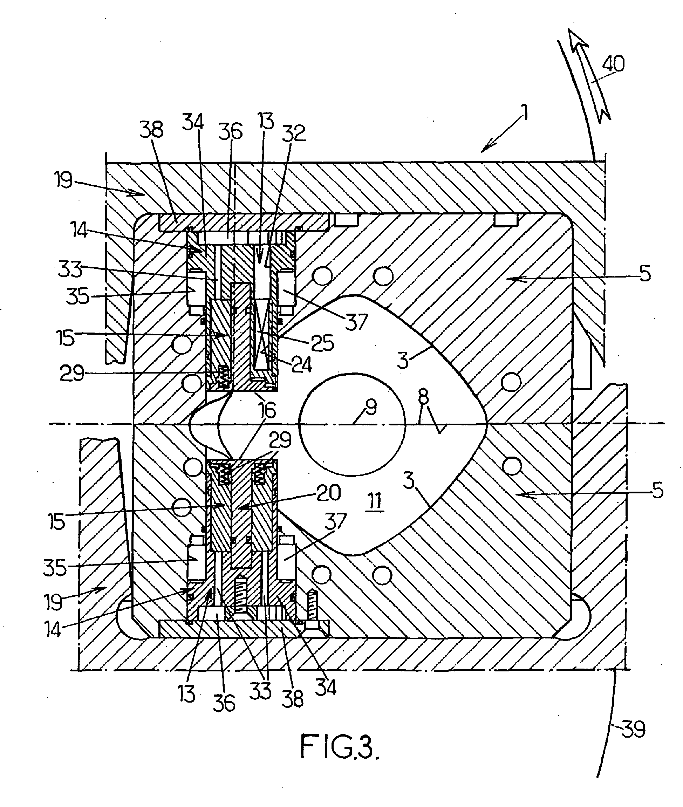

Aux figures 2 et 3 (sur lesquelles les mêmes références numériques sont conservées pour désigner les parties ou éléments identiques à ceux respectifs des figures 1A à 1C) est illustré de façon détaillée un mode de réalisation concret d'un moule agencé conformément à l'invention.

Sur la figure 2, seul est montré en vue de face un des demi-moules 5 dans lequel l'empreinte 3 creusée dans la face 8 de contact du demi-moule correspond à une forme de récipient qui n'est donnée qu'à titre de simple exemple. L'insert 13 associé à ce demi-moule 5 est vu de face.

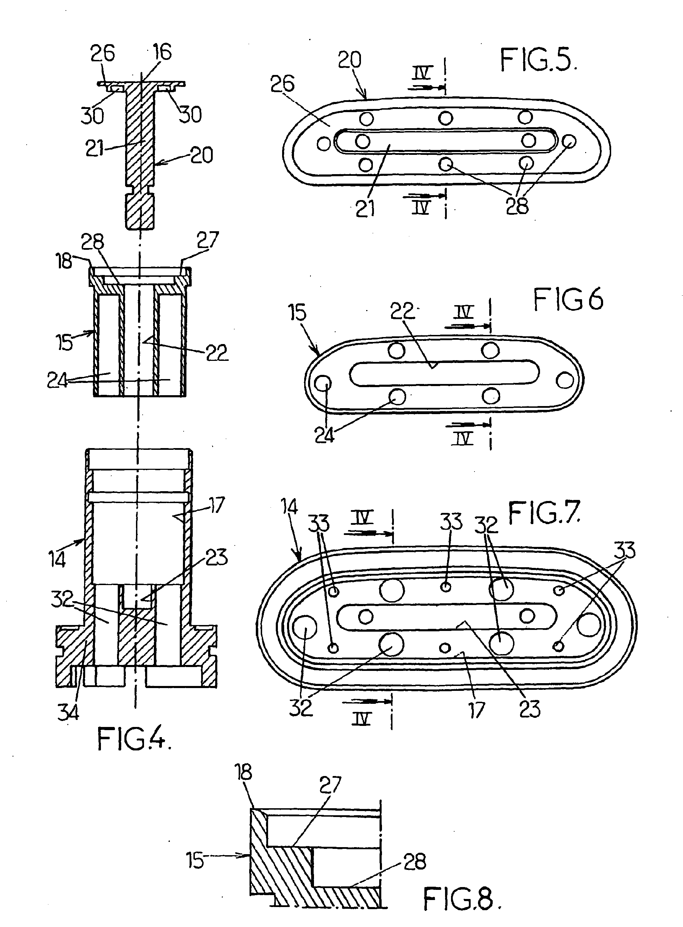

Sur la figure 3 sont représentés, en coupe selon la ligne III-III de la figure 2, les deux demi-moules 5 en position de fermeture ; dans l'exemple illustré, les deux demi-moules 5 sont engagés dans des porte-moules 19 respectifs représentés partiellement. Les deux inserts 13 sont agencés de façon identique de la manière qui est exposée ci-après en référence à la figure 4 sur laquelle ils sont montrés de façon éclatée dans leur ensemble et aux figures 5 à 8 qui en montrent les composants principaux individuellement pour une meilleure compréhension.

Dans chaque insert 13, le piston principal 14 est agencé avec une face 16 frontale de poussée appartenant à une plaque transversale 26 d'une pièce 20 (pièce supérieure à la figure 4 montrée en coupe selon la ligne IV-IV de la figure 5 et en vue de dessous à la figure 5) ayant en coupe transversale une forme générale en T dont la tige 21 est engagée à travers le piston secondaire 15 qui est, à cet effet, évidé centralement en 22 et entoure ladite tige 21. La base de la tige 21 est emboîtée dans un creux 23 de forme complémentaire prévu dans le piston principal 14 et est solidarisée à celui-ci par exemple par vissage. Ainsi constitué, le piston principal 14 possède une face 16 de poussée qui est sensiblement plane et qui se développe sur une grande surface conformée selon le contour intérieur de la poignée à former (c'est cette face 16 de poussée qui est essentiellement visible dans la représentation de l'insert de la figure 2). Axialement, la pièce 20 est dimensionnée de manière à laisser le jeu nécessaire au déplacement du piston secondaire 15.

Le piston secondaire 15 (pièce médiane à la figure 4 montrée en coupe selon la ligne IV-IV de la figure 6 et en vue de dessous à la figure 6), évidé centralement en 22, est pourvu de plusieurs alésages 24 borgnes ouverts inférieurement qui sont répartis sur son pourtour. Ces alésages 24 reçoivent des moyens de chauffage électrique sous forme de cartouches chauffantes 25 (l'une d'elles est représentée schématiquement à la figure 3). L'extrémité frontale (en haut sur la figure 4) du piston 15 est creusée d'un évidement 27 complémentaire de la forme de la plaque 26 de manière que, lorsque le piston 15 est repoussé en position saillante, la plaque 26 de la pièce 20 puisse s'effacer dans cet évidement 27. Au surplus, cet évidement 27 est lui-même surcreusé centralement en 28 pour recevoir en appui les extrémités de ressorts 29 de rappel interposés entre le piston 15 et la plaque 26 solidaire du piston 14, laquelle plaque 26 est, à cet effet, pourvue d'évidements 30 recevant les extrémités opposées des ressorts 29. Les ressorts 29 sont répartis sur le pourtour de la plaque 26 et du piston secondaire 15.

Une partie de l'extrémité frontale du piston secondaire 15 est montrée à échelle très agrandie à la figure 8 de manière à rendre mieux visible la conformation de la face 18 frontale du piston secondaire 15 qui est formée par le bord de la paroi délimitant l'évidement 27. Ce bord est chanfreiné intérieurement de manière à constituer une face 18 frontale fine conformée en couteau s'étendant selon un contour fermé correspondant à la forme de l'extrémité du piston secondaire 15. La face frontale 18, mise au contact de la matière thermoplastique, peut ainsi constituer une pièce de chauffage propre à ramollir la matière thermoplastique et à s'incruster dans celle-ci une fois ramollie pour découper ou au moins prémarquer le flan de matière qu'elle entoure.

Enfin, le piston principal 14 (pièce inférieure à la figure 4 montrée en coupe selon la ligne IV-IV de la figure 7 et en vue de dessus à la figure 7) est, quant à lui, pourvu de deux ensembles d'alésages alternant les uns avec les autres comme visible à la figure 7 :
- des alésages 32 sont situés en regard des alésages 24 du piston secondaire 15 et traversent le fond du piston principal 14 entre sa face d'extrémité tournée vers le fond du logement 12 et sa face d'extrémité constituant le fond de l'évidement 17 abritant le piston secondaire 15 ; les alésages 32 constituent des passages pour les fils d'alimentation électrique des cartouches 25 chauffantes ;
- des alésages 33 sont situés en regard de zones pleines du piston secondaire 15 et traversent le fond du piston principal 14 entre sa face d'extrémité tournée vers le fond du logement 12 et sa face d'extrémité constituant le fond de l'évidement 17 abritant le piston secondaire 15 ; ces alésages 33 sont constitués en tant qu'alésages calibrés formant des restrictions dont le rôle sera exposé plus loin.

Le piston principal 14 est équipé d'une tête 34 de piston qui est élargie et qui est engagée de façon étanche dans une partie 35 elle-même élargie du logement 12. On constitue ainsi deux chambres respectivement 36 et 37 de part et d'autre de la tête de piston 34, comme visible à la figure 3, de sorte que le piston principal 14 et le logement 12 constituent un vérin pneumatique à double effet (les canaux d'alimentation en fluide sous pression n'étant pas visibles).

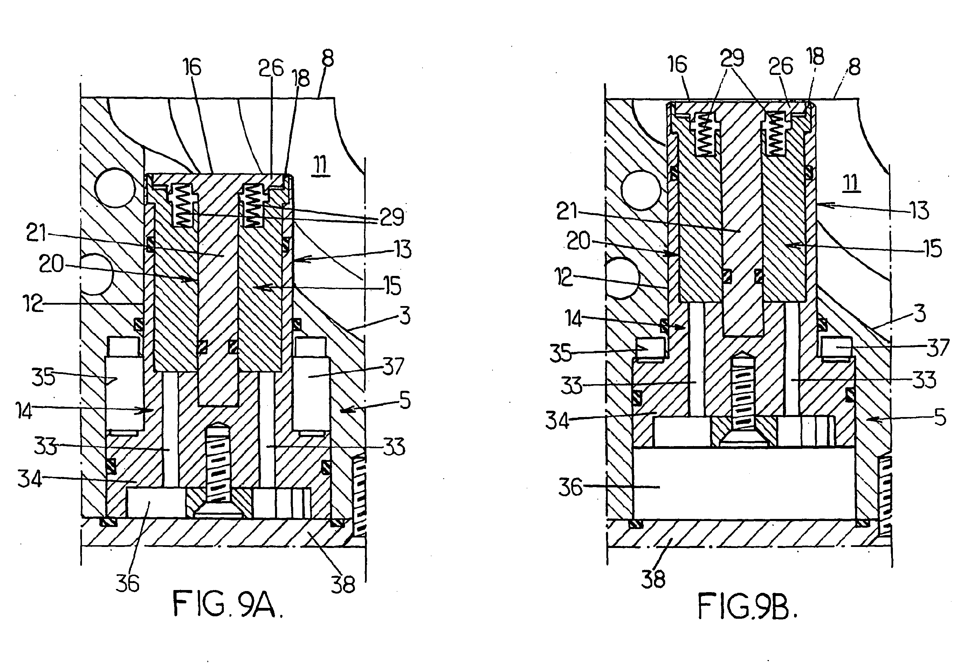

Le fonctionnement du dispositif qui vient d'être décrit va maintenant être exposé en référence aux figures 9A à 9C sur lesquelles un insert 13 est représenté seul à échelle très agrandie respectivement dans trois positions fonctionnelles différentes.

Dans la position effacée ou de repos de l'insert 13 montrée à la figure 9A, le piston principal est en appui contre le fond du logement 12 (ici constitué par une plaque 38 fixée par vissage au corps du demi-moule 5). Le piston secondaire 15 est de son côté maintenu en position effacée dans le piston principal 14 sous l'action des ressorts de rappel 29, position dans laquelle la face 16 de poussée est maintenue dans le plan de la face 18 frontale du piston secondaire 15 ou légèrement en avant de ce bord.

Au cours de la phase de soufflage sous haute pression du corps du récipient, du fluide sous pression est admis dans la chambre 36 et, sous la poussée de ce fluide, l'insert 13 est dans son ensemble repoussé jusqu'à ce que la tête 34 du piston principal 14 parvienne en butée contre l'extrémité opposée de la partie 35 élargie du logement 12, comme montré à la figure 9B. Dans cette position, la face 16 de poussée qui a repoussé la zone A de paroi du corps de récipient est en léger retrait (typiquement de l'ordre de 0,3 mm) par rapport au plan de joint 9.

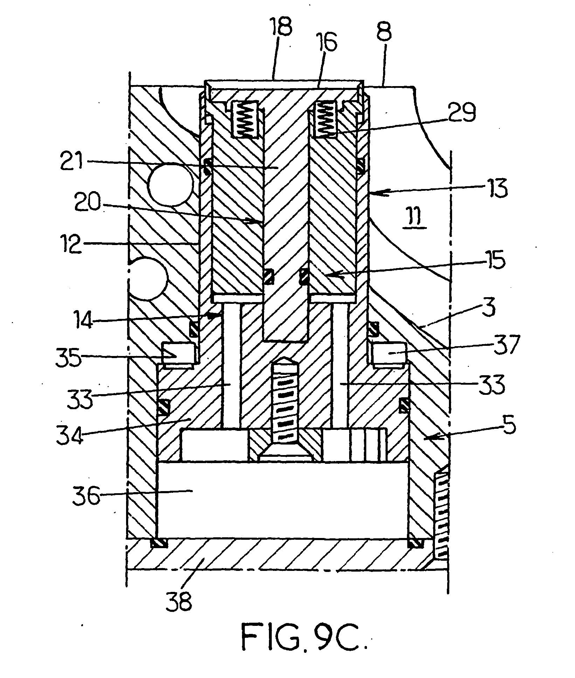

A ce moment, la pression du fluide ayant traversé les alésages calibrés 33 atteint sa valeur maximale et repousse le piston secondaire 15 à l'encontre des efforts antagonistes des ressorts 29. Comme visible à la figure 9C, la face 18 frontale devient saillante au-delà de la face 16 de poussée et parvient sensiblement jusqu'au plan de joint 9. Le piston secondaire 15 étant chauffé à la température de ramollissement de la matière thermoplastique sous l'action des cartouches 25 chauffantes, la face 18 frontale ramollit la matière thermoplastique sur le pourtour de la zone A. Les deux zones A rapprochées l'une contre l'autre par les déplacements concomitants des deux inserts 13 sont ainsi soudées l'une à l'autre périphériquement, ce qui a pour résultat la fermeture étanche du corps du récipient et la fermeture étanche de la poignée creuse. Simultanément, les faces 18 frontales minces agissent comme deux couteaux face à face et pénètrent dans la matière ramollie; elles découpent la double zone A ou la prémarquent en vue de son élimination ultérieure.

Ensuite, le fluide sous pression est évacué hors de la chambre 36 de sorte que les ressorts 29 ramènent le piston secondaire 15 en position effacée. Puis l'introduction de fluide sous pression dans la chambre 37 ramène le piston principal 14, et par là même l'ensemble de l'insert 13, dans sa position initiale.

Les cartouches 25 chauffantes maintiennent en permanence le piston secondaire dans son ensemble à la température de ramollissement de la matière thermoplastique. Or, une déformation correcte de la matière thermoplastique lors de la phase de repoussage des zones A nécessite que cette matière soit à une température sensiblement inférieure à la température de ramollissement, et donc que la face 16 de poussée soit à une température inférieure à cette température de ramollissement. Pour éviter un échauffement excessif du piston principal 14 et de la pièce 20 qui en est solidaire en présence du piston secondaire, on insuffle un gaz de refroidissement dans l'intervalle (jeu structurel) entre les surfaces en vis-à-vis du piston secondaire 15 et de l'alésage 17 du piston principal 14.

L'agencement de moule conforme à l'invention trouve une application tout particulièrement intéressante pour les récipients constitués en une polyoléfine, dont la température de transition vitreuse est sensiblement inférieure à la température ambiante (# 20°C), et notamment pour les récipients en polypropylène.

Pour une matière thermoplastique telle que le polypropylène, la température de ramollissement est d'environ 170°C. Ainsi le piston secondaire est maintenu à une température comprise entre 130°C et 200°C, avantageusement entre 150°C et 190°C, tandis que le piston principal est maintenu à une température comprise entre 50°C à 100°C (sachant que par ailleurs les demi-moules 5 sont refroidis à une température de l'ordre de 75°C par une circulation d'eau froide dans des conduits internes prévus dans les demi-moules).

Les dispositions conformes à l'invention peuvent trouver une application intéressante dans une installation tournante de moulage pour la fabrication, par soufflage ou étirage-soufflage de préformes chauffées, de récipients en matière thermoplastique munis d'une poignée intégrale, ladite installation comportant un carrousel tournant équipé d'une multiplicité de moules répartis sur son pourtour et agencés comme exposé plus haut ; à la figure 3, on a schématisé en 39 le plateau de support des moules 1, la rotation de ce plateau étant indiquée par la flèche 40.

Les dispositions conformes à l'invention peuvent également trouver une application intéressante dans une installation fixe de moulage pour la fabrication, par soufflage ou étirage-soufflage de préformes chauffées, de récipients en matière thermoplastique munis d'une poignée intégrale, ladite installation comportant plusieurs moules supportés de façon fixe sensiblement en ligne et agencés comme exposé plus haut, ce type d'installation convenant en particulier pour la fabrication de récipients en une polyoléfine telle que du polypropylène destinés au conditionnement de produits ménagers (par exemple détergents, lessives liquides, ...).

Une installation de moulage constituée comme indiqué ci-dessus est capable, grâce à la mise en oeuvre des dispositions de l'invention, d'atteindre des cadences de fabrication élevées, de l'ordre par exemple de 1500 récipients par heure.

Présenté sous un autre aspect de l'invention, les récipients 2 en matière thermoplastique, notamment une polyoléfine telle que du polypropylène, munis d'une poignée 4 intégrale sont fabriqués par soufflage ou étirage-soufflage d'une préforme chauffée à l'aide d'un moule 1 comprenant au moins deux demi-moules 5
- mobiles l'un par rapport à l'autre,
- possédant des faces 8 respectives de contact mutuel définissant, en position de fermeture, un plan de joint 9,
- possédant respectivement deux empreintes 10 qui, réunies, définissent une cavité 11 de moulage du corps 3 et de l'épaule du récipient 2 final, et
- comportant respectivement deux logements 12 qui sont sensiblement perpendiculaires auxdites faces 8 respectives de contact et sensiblement mutuellement alignés dans la position de fermeture du moule 1 et qui renferment deux inserts 13 respectifs formant pistons mobiles pneumatiquement entre
   . une position effacée dans laquelle les deux inserts 13 sont rentrés au moins en majeure partie dans leurs logements 12 respectifs et
   . une position sortie dans laquelle les deux inserts 13 sont repoussés en direction l'un de l'autre en pinçant deux zones A déterminées de paroi du corps 3 du récipient jusqu'à mettre au contact l'une de l'autre lesdites deux zones A de paroi du corps 3 qui sont alors soudées thermiquement l'une à l'autre.

Dans ce contexte le procédé conforme à l'invention se **caractérise**
**en ce qu**'on constitue chaque insert 13 avec deux pistons 14, 15 emboîtés l'un dans l'autre de façon télescopique, à savoir un piston principal 14 ou piston de poussée ayant une face frontale 16 de poussée située centralement et, logé dans ledit piston principal 14, un piston secondaire 15 ou piston de soudage disposé coaxialement et ayant une face 18 frontale entourant ladite face 16 frontale du piston principal selon un contour fermé coïncidant avec la périphérie de ladite zone A de paroi du corps du récipient, en ce qu'on prévoit des moyens de chauffage 25 pour maintenir au moins ladite face 18 frontale du piston secondaire 15 à la température de ramollissement de la matière thermoplastique, et
en ce qu'on agence les deux pistons principal et secondaire 14, 15 de manière telle que
- dans une première phase de fonctionnement, on déplace le piston principal 14 de sa position effacée vers sa position saillante tandis qu'on maintient le piston secondaire 15 effacé dans ledit piston principal, la face 16 frontale dudit piston principal repoussant ladite zone A déterminée de la paroi du corps du récipient, et
- dans une seconde phase de fonctionnement, on déplace le piston secondaire 15 par rapport au piston principal 14 de sa position effacée vers sa position saillante de sorte que sa face 18 frontale chaude vienne en appui contre la périphérie de ladite zone A de paroi du corps du récipient pour en ramollir la matière, la souder périphériquement avec la portion de paroi repoussée par le piston en regard et au moins prémarquer le pourtour de cette zone A de paroi.

## Revendications

1. Moule (1) pour la fabrication, par soufflage ou étirage-soufflage d'une préforme chauffée, d'un récipient (2) en matière thermoplastique, notamment une polyoléfine telle que du polypropylène, muni d'une poignée (4) intégrale, ledit moule (1) comprenant au moins deux demi-moules (5)
- mobiles l'un par rapport à l'autre,
- possédant des faces (8) respectives de contact mutuel définissant, en position de fermeture, un plan de joint (9),
- possédant respectivement deux empreintes (10) qui, réunies, définissent une cavité (11) de moulage du corps (3) et de l'épaule du récipient (2) final, et
- comportant respectivement deux logements (12) qui sont sensiblement perpendiculaires auxdites faces (8) respectives de contact et sensiblement mutuellement alignés dans la position de fermeture du moule (1) et qui renferment deux inserts (13) respectifs formant pistons mobiles pneumatiquement entre
. une position effacée dans laquelle les deux inserts (13) sont rentrés au moins en majeure partie dans leurs logements (12) respectifs et
. une position sortie dans laquelle les deux inserts (13) sont repoussés en direction l'un de l'autre en pinçant deux zones (A) déterminées de paroi du corps (3) du récipient jusqu'à mettre au contact l'une de l'autre lesdites deux zones (A) de paroi du corps (3) qui sont alors soudées thermiquement l'une à l'autre,
**caractérisé en ce que** chaque insert (13) comprend deux pistons (14, 15) emboîtés l'un dans l'autre de façon télescopique, à savoir un piston principal (14) ou piston de poussée ayant une face frontale (16) de poussée située centralement et, logé dans ledit piston principal (14), un piston secondaire (15) ou piston de soudage disposé coaxialement et ayant une face (18) frontale entourant ladite face (16) frontale du piston principal selon un contour fermé coïncidant avec la périphérie de ladite zone (A) de paroi du corps du récipient, des moyens de chauffage (25) étant prévus pour maintenir au moins ladite face (18) frontale du piston secondaire (15) à la température de ramollissement de la matière thermoplastique, les deux pistons principal et secondaire (14, 15) étant agencés de manière telle que
- dans une première phase de fonctionnement, le piston principal (14) est déplacé de sa position effacée vers sa position saillante tandis que le piston secondaire (15) reste effacé dans ledit piston principal, la face (16) frontale dudit piston principal repoussant ladite zone (A) déterminée de la paroi du corps du récipient, et
- dans une seconde phase de fonctionnement, le piston secondaire (15) est déplacé par rapport au piston principal (14) de sa position effacée vers sa position saillante de sorte que sa face (18) frontale chaude vienne en appui contre la périphérie de ladite zone (A) de paroi du corps du récipient pour en ramollir la matière, la souder périphériquement avec la portion de paroi repoussée par le piston en regard et au moins prémarquer le pourtour de cette zone (A) de paroi.

2. Moule selon la revendication 1, **caractérisé en ce que** chaque insert (13) comprend en outre :
- au moins un canal principal d'alimentation en gaz sous pression débouchant dans une chambre (36) dudit logement (12) pour repousser ledit piston principal (14) dans sa position saillante,
- des moyens (37) de rappel du piston principal (14) de sa position saillante vers sa position effacée,
- au moins un canal (33) secondaire d'alimentation en gaz sous pression débouchant dans le fond dudit évidement (17) pour repousser ledit piston secondaire (15) dans sa position saillante,
- des moyens (29) de rappel du piston secondaire (15) de sa position saillante vers sa position effacée, et
- des moyens de commande agencés de manière à alimenter en gaz sous pression sélectivement d'abord le canal principal de manière à déplacer le piston principal (14) avec le piston secondaire (15) en position effacée dans la susdite première phase de fonctionnement, puis le canal secondaire de manière à déplacer le piston secondaire (15) dans la susdite seconde phase de fonctionnement.

3. Moule selon la revendication 2, **caractérisé en ce que** le canal secondaire comprend au moins un conduit (33) calibré s'étendant dans le piston principal (14) entre sa face d'extrémité tournée vers la chambre (36) du logement (12) et sa face d'extrémité constituant le fond du susdit évidement (17) abritant le piston secondaire (15), ce grâce à quoi, lorsque le piston principal (14) parvient en butée dans sa position saillante, le gaz sous pression alimenté dans le logement (12) passe, à travers le conduit (33) calibré, dans l'évidement (17) pour repousser le piston secondaire (15) vers sa position saillante.

4. Moule selon la revendication 3, **caractérisé en ce que** le canal secondaire comprend plusieurs conduits (33) calibrés répartis sur le pourtour du piston principal (14).

5. Moule selon l'une quelconque des revendications 1 à 4, **caractérisé en ce que** la face (16) frontale de poussée du piston principal (14) appartient à une plaque frontale (26) située centralement et supportée par une tige (21) axiale solidaire du piston principal (14) et **en ce que** le piston secondaire (15) est évidé (22) centralement et entoure ladite tige (21).

6. Moule selon l'une quelconque des revendications 1 à 5, **caractérisé en ce que** les moyens de chauffage sont propres à chauffer le piston secondaire (15) et comprennent au moins une cartouche (25) chauffante électrique logée dans un alésage (24) respectif du piston secondaire (15).

7. Moule selon la revendication 6, **caractérisé en ce que** les moyens de chauffage comprennent plusieurs cartouches (25) chauffantes électriques logées dans des alésages (24) respectifs répartis sur le pourtour du piston secondaire (15).

8. Moule selon l'une quelconque des revendications 1 à 7, **caractérisé en ce qu'**un gaz de refroidissement est insufflé entre le piston principal (14) et le piston secondaire (15) pour maintenir le piston principal à une température sensiblement inférieure à la température de ramollissement de la matière thermoplastique.

9. Moule selon l'une quelconque des revendications 1 à 8, **caractérisé en ce que** la face (18) frontale du piston secondaire (15) est conformée en couteau s'étendant selon le susdit contour fermé.

10. Moule selon l'une quelconque des revendications 2 à 9, **caractérisé en ce que** les moyens de rappel du piston principal (14) de sa position saillante vers sa position effacée sont des moyens pneumatiques, le piston principal (14) et son logement (12) étant agencés pour constituer un vérin à double effet.

11. Moule selon l'une quelconque des revendications 2 à 10, **caractérisé en ce que** les moyens de rappel du piston secondaire (15) comprennent au moins un ressort de rappel (29) interposé entre le piston principal (14) et le piston secondaire (15).

12. Installation tournante de moulage pour la fabrication, par soufflage ou étirage-soufflage de préformes chauffées, de récipients en matière thermoplastique munis d'une poignée intégrale, ladite installation comportant un carrousel (39) tournant (40) équipé d'une multiplicité de moules (1) répartis sur son pourtour, **caractérisée en ce que** les moules (1) sont agencés selon l'une quelconque des revendications 1 à 11.

13. Installation fixe de moulage pour la fabrication, par soufflage ou étirage-soufflage de préformes chauffées, de récipients en matière thermoplastique munis d'une poignée intégrale, ladite installation comportant plusieurs moules (1) supportés de façon fixe sensiblement en ligne, **caractérisée en ce que** les moules (1) sont agencés selon l'une quelconque des revendications 1 à 11.

14. Procédé pour la fabrication, par soufflage ou étirage-soufflage d'une préforme chauffée, d'un récipient (2) en matière thermoplastique, notamment une polyoléfine telle que du polypropylène, munis d'une poignée (4) intégrale à l'aide d'un moule (1) comprenant au moins deux demi-moules (5)
- mobiles l'un par rapport à l'autre,
- possédant des faces (8) respectives de contact mutuel définissant, en position de fermeture, un plan de joint (9),
- possédant respectivement deux empreintes (10) qui, réunies, définissent une cavité (11) de moulage du corps (3) et de l'épaule du récipient (2) final, et
- comportant respectivement deux logements (12) qui sont sensiblement perpendiculaires auxdites faces (8) respectives de contact et sensiblement mutuellement alignés dans la position de fermeture du moule (1) et qui renferment deux inserts (13) respectifs formant pistons mobiles pneumatiquement entre
. une position effacée dans laquelle les deux inserts (13) sont rentrés au moins en majeure partie dans leurs logements (12) respectifs et
. une position sortie dans laquelle les deux inserts (13) sont repoussés en direction l'un de l'autre en pinçant deux zones (A) déterminées de paroi du corps (3) du récipient jusqu'à mettre au contact l'une de l'autre lesdites deux zones (A) de paroi du corps (3) qui sont alors soudées thermiquement l'une à l'autre,
**caractérisé**
**en ce qu'**on constitue chaque insert (13) avec deux pistons (14, 15) emboîtés l'un dans l'autre de façon télescopique, à savoir un piston principal (14) ou piston de poussée ayant une face frontale (16) de poussée située centralement et, logé dans ledit piston principal (14), un piston secondaire (15) ou piston de soudage disposé coaxialement et ayant une face (18) frontale entourant ladite face (16) frontale du piston principal selon un contour fermé coïncidant avec la périphérie de ladite zone (A) de paroi du corps du récipient,
**en ce qu'**on prévoit des moyens de chauffage (25) pour maintenir au moins ladite face (18) frontale du piston secondaire (15) à la température de ramollissement de la matière thermoplastique, et
**en ce qu'**on agence les deux pistons principal et secondaire (14, 15) de manière telle que
- dans une première phase de fonctionnement, on déplace le piston principal (14) de sa position effacée vers sa position saillante tandis qu'on maintient le piston secondaire (15) effacé dans ledit piston principal, la face (16) frontale dudit piston principal repoussant ladite zone (A) déterminée de la paroi du corps du récipient, et
- dans une seconde phase de fonctionnement, on déplace le piston secondaire (15) par rapport au piston principal (14) de sa position effacée vers sa position saillante de sorte que sa face (18) frontale chaude vienne en appui contre la périphérie de ladite zone (A) de paroi du corps du récipient pour en ramollir la matière, la souder périphériquement avec la portion de paroi repoussée par le piston en regard et au moins prémarquer le pourtour de cette zone (A) de paroi.

## Claims

1. A mold (1) for manufacturing, by blow molding or stretch-blow molding of a heated preform, a container (2) made of thermoplastic material, in particular a polyolefin such as polypropylene, provided with an integral handle (4), said mold (1) comprising at least two mold halves (5) which
- are movable relative to one another,
- have respective mutual contact faces (8) defining, in a closed position, a junction plane (9),
- have respectively two imprints (10) which, joined together, define a molding cavity (11) of the body (3) and the shoulder of the final container (2), and
- comprise respectively two recesses (12) which are substantially perpendicular to said respective contact faces (8) and substantially mutually aligned in the closed position of the mold (1) and which enclose two respective inserts (13) forming pistons which can be moved pneumatically between
• a retracted position in which the two inserts (13) are returned, at least for the most part, into their respective recesses (12) and
• an extended position in which the two inserts (13) are pushed together pinching two given wall zones (A) of the body (3) of the container until said two wall zones (A) of the body (3), which are then heat-welded together, are brought into mutual contact,
**characterized in that** each insert (13) comprises two pistons (14, 15) telescoped one within the other, namely a main piston (14) or thrust piston having a centrally located front thrust face (16) and, accommodated in said main piston (14), a coaxially arranged secondary piston (15) or welding piston having a front face (18) surrounding said front face (16) of the main piston along a closed contour coinciding with the periphery of said wall zone (A) of the body of the container, heating means (25) being provided for keeping at least said front face (18) of the secondary piston (15) at the softening temperature of the thermoplastic material, the two pistons, the main piston and the secondary piston (14, 15), being arranged in such a way that
- in a first operating phase, the main piston (14) is moved from its retracted position to its protruding position, whereas the secondary piston (15) remains retracted in said main piston, the front face (16) of said main piston pushing said given zone (A) of the wall of the body of the container, and
- in a second operating phase, the secondary piston (15) is moved relative to the main piston (14) from its retracted position to its protruding position in such a way that its hot front face (18) rests against the periphery of said wall zone (A) of the body of the container in order to soften the material thereof, to weld it peripherally with the wall portion pushed by the opposing piston, and at least to premark the perimeter of this wall zone (A).

2. The mold as claimed in claim 1, **characterized in that** each insert (13) further comprises:
- at least one main pressurized gas supply channel which opens into a chamber (36) of said recess (12) to push said main piston (14) into its protruding position,
- means (37) for returning the main piston (14) from its protruding position to its retracted position,
- at least one secondary pressurized gas supply channel (33) which opens into the bottom of said aperture (17) to push said secondary piston (15) into its protruding position,
- means (29) for returning the secondary piston (15) from its protruding position to its retracted position, and
- control means arranged so as to supply with pressurized gas selectively first the main channel so as to move the main piston (14) with the secondary piston (15) in the retracted position in said first operating phase, then the secondary channel so as to move the secondary piston (15) in said second operating phase.

3. The mold as claimed in claim 2, **characterized in that** the secondary channel comprises at least one calibrated conduit (33) extending in the main piston (14) between its end face turned toward the chamber (36) of the recess (12) and its end face forming the bottom of said aperture (17) accommodating the secondary piston (15), whereby, when the main piston (14) abuts in its protruding position, the pressurized gas supplied in the recess (12) passes, through the calibrated conduit (33), into the aperture (17) in order to push the secondary piston (15) to its protruding position.

4. The mold as claimed in claim 3, **characterized in that** the secondary channel comprises a plurality of calibrated conduits (33) distributed over the perimeter of the main piston (14).

5. The mold as claimed in any one of claims 1 to 4, **characterized in that** the front thrust face (16) of the main piston (14) pertains to a front plate (26) located centrally and supported by an axial stem (21) integral with the main piston (14) and **in that** the secondary piston (15) is centrally hollowed (22) and surrounds said stem (21).

6. The mold as claimed in any one of claims 1 to 5, **characterized in that** the heating means are suitable for heating the secondary piston (15) and comprise at least one electric cartridge heater (25) accommodated in a respective bore (24) in the secondary piston (15).

7. The mold as claimed in claim 6, **characterized in that** the heating means comprise a plurality of electric cartridge heaters (25) accommodated in respective bores (24) distributed over the perimeter of the secondary piston (15).

8. The mold as claimed in any one of claims 1 to 7, **characterized in that** a cooling gas is blown in between the main piston (14) and the secondary piston (15) to keep the main piston at a temperature substantially lower than the softening temperature of the thermoplastic material.

9. The mold as claimed in any one of claims 1 to 8, **characterized in that** the front face (18) of the secondary piston (15) is shaped in the manner of a knife extending along said closed contour.

10. The mold as claimed in any one of claims 2 to 9, **characterized in that** the means for returning the main piston (14) from its protruding position to its retracted position are pneumatic means, the main piston (14) and its recess (12) being arranged so as to form a double acting cylinder.

11. The mold as claimed in any one of claims 2 to 10, **characterized in that** the means for returning the secondary piston (15) comprise at least one return spring (29) interposed between the main piston (14) and the secondary piston (15).

12. A rotary molding installation for manufacturing, by blow molding or stretch-blow molding of heated preforms, containers made of thermoplastic material and provided with an integral handle, said installation comprising a rotary (40) carousel (39) equipped with a multiplicity of molds (1) distributed over its perimeter, **characterized in that** the molds (1) are arranged as claimed in any one of claims 1 to 11.

13. A fixed molding installation for manufacturing, by blow molding or stretch-blow molding of heated preforms, containers made of thermoplastic material and provided with an integral handle, said installation comprising a plurality of molds (1) supported in a fixed manner substantially in a line, **characterized in that** the molds (1) are arranged as claimed in any one of claims 1 to 11.

14. A method for manufacturing, by blow molding or stretch-blow molding of a heated preform, a container (2) made of thermoplastic material, in particular a polyolefin such as polypropylene, provided with an integral handle (4) by use of a mold (1) comprising at least two mold halves (5) which
- are movable relative to one another,
- have respective mutual contact faces (8) defining, in a closed position, a junction plane (9),
- have respectively two imprints (10) which, joined together, define a molding cavity (11) of the body (3) and the shoulder of the final container (2), and
- comprise respectively two recesses (12) which are substantially perpendicular to said respective contact faces (8) and substantially mutually aligned in the closed position of the mold (1) and which enclose two respective inserts (13) forming pistons which can be moved pneumatically between
• a retracted position in which the two inserts (13) are returned, at least for the most part, into their respective recesses (12) and
• an extended position in which the two inserts (13) are pushed together pinching two given wall zones (A) of the body (3) of the container until said two wall zones (A) of the body (3), which are then heat welded together, are brought into mutual contact,
**characterized**
**in that** each insert (13) is formed with two pistons (14, 15) telescoped one within the other, namely a main piston (14) or thrust piston having a centrally located front thrust face (16) and, accommodated in said main piston (14), a coaxially arranged secondary piston (15) or welding piston having a front face (18) surrounding said front face (16) of the main piston along a closed contour coinciding with the periphery of said wall zone (A) of the body of the container,
**in that** heating means (25) are provided for keeping at least said front face (18) of the secondary piston (15) at the softening temperature of the thermoplastic material,
and **in that** the two pistons, the main piston and the secondary piston (14, 15), are configured in such a way that
- in a first operating phase, the main piston (14) is moved from its retracted position to its protruding position, whereas the secondary piston (15) is kept retracted in said main piston, the front face (16) of said main piston pushing said given zone (A) of the wall of the body of the container, and
- in a second operating phase, the secondary piston (15) is moved relative to the main piston (14) from its retracted position to its protruding position in such a way that its hot front face (18) rests against the periphery of said wall zone (A) of the body of the container in order to soften the material thereof, to weld it peripherally with the wall portion pushed by the opposing piston, and at least to premark the perimeter of this wall zone (A).

## Patentansprüche

1. Form (1) zur Herstellung eines Behälters (2) aus einem thermoplastischen Werkstoff, insbesondere einem Polyolefin wie Polypropylen, der mit einem damit eine Einheit bildenden Griff (4) versehen ist, durch Blasformen oder Streckblasen eines erwärmten Vorformlings, wobei die Form (1) mindestens zwei Formhälften (5) umfasst, die
- beweglich zueinander sind,
- die jeweiligen Flächen (8) für den gegenseitigen Kontakt besitzen, die in der geschlossenen Stellung eine Verbindungsebene (9) definieren,
- jeweils zwei Kavitäten (10) besitzen, die gemeinsam einen Formhohlraum (11) für den Körper (3) und die Schulter des endgültigen Behälters (2) definieren, und
- jeweils die zwei Aufnahmen (12) aufweisen, die ungefähr senkrecht zu den jeweiligen Kontaktflächen (8) verlaufen und in der geschlossenen Stellung der Form (1) in etwa nacheinander ausgerichtet sind und die zwei jeweiligen Einsätze (13) enthalten, die Kolben bilden, die sich pneumatisch zwischen
. einer zurückgezogenen Stellung, in der sich die beiden Einsätze (13) zumindest zum überwiegenden Teil in ihre jeweiligen Aufnahmen (12) befinden, und
. einer herausragenden Stellung bewegen, in der die beiden Einsätze (13) aufeinander zu geschoben sind, indem zwei bestimmte Wandbereiche (A) des Körpers (3) des Behälters so weit zusammengepresst werden, bis die beiden Wandbereiche (A) des Körpers (3) miteinander in Kontakt gebracht und nun miteinander unter Wärmeeinfluss verschweißt werden,
**dadurch gekennzeichnet, dass** jeder Einsatz (13) zwei Kolben (14, 15) umfasst, die teleskopartig ineinander stecken, das heißt einen Hauptkolben (14) oder Schubkolben, der eine vordere Schubseite (16) aufweist, die sich mittig befindet, und einen zweiten Kolben (15) oder Schweißkolben, der in dem Hauptkolben (14) aufgenommen ist, koaxial angeordnet ist und eine Vorderseite (18) aufweist, die die Vorderseite (16) des Hauptkolbens entlang einem geschlossenen Umriss umgibt, der sich mit dem Umfang des Wandbereichs (A) des Körpers des Behälters deckt, wobei Heizmittel (25) dafür vorgesehen sind, zumindest für die Vorderseite (18) des zweiten Kolbens (15) die Erweichungstemperatur des thermoplastischen Werkstoffs aufrechtzuerhalten, wobei der Hauptkolben und der zweite Kolben (14, 15) derart ausgelegt sind, dass
- der Hauptkolben (14) in einer ersten Arbeitsphase aus seiner zurückgezogenen Stellung in seine herausragende Stellung gebracht wird, während der zweite Kolben (15) zurückgezogen im Hauptkolben bleibt, wobei die Vorderseite (16) des Hauptkolbens den bestimmten Wandbereich (A) des Körpers des Behälters wegschiebt, und
- der zweite Kolben (15) in einer zweiten Arbeitsphase aus seiner zurückgezogenen Stellung in seine herausragende Stellung relativ zum Hauptkolben (14) bewegt wird, sodass seine heiße Vorderseite (18) am Umfang des Wandbereichs (A) des Körpers des Behälters anliegt, um den Werkstoff dort zu erweichen, ihn am Umfang mit dem Wandabschnitt zu verschweißen, der von dem gegenüber befindlichen Kolben weggeschoben wurde, und den äußeren Umfang dieses Wandbereichs (A) zumindest vorzumarkieren.

2. Form nach Anspruch 1, **dadurch gekennzeichnet, dass** jeder Einsatz (13) des Weiteren Folgendes umfasst:
- mindestens einen Hauptkanal für die Versorgung mit Druckgas, der in einer Kammer (36) der Aufnahme (12) mündet, um den Hauptkolben (14) in seine herausragende Stellung zu schieben,
- Mittel (37) zum Zurückbewegen des Hauptkolbens (14) aus seiner herausragenden Stellung in seine zurückgezogene Stellung,
- mindestens einen zweiten Kanal (33) für die Versorgung mit Druckgas, der in den Boden der Aussparung (17) mündet, um den zweiten Kolben (15) in seine herausragende Stellung zu schieben,
- Mittel (29) zum Zurückbewegen des zweiten Kolbens (15) aus seiner herausragenden Stellung in seine zurückgezogene Stellung, und
- Steuermittel, die so ausgelegt sind, dass sie gezielt zuerst den Hauptkanal mit Druckgas versorgen, um den Hauptkolben (14) in die vorstehend genannte erste Arbeitsphase zu versetzen, wobei sich der zweite Kolben (15) in der zurückgezogenen Stellung befindet, und dann den zweiten Kanal, um den zweiten Kolben (15) in die vorstehend genannte zweite Arbeitsphase zu versetzen.

3. Form nach Anspruch 2, **dadurch gekennzeichnet, dass** der zweite Kanal mindestens eine kalibrierte Leitung (33) umfasst, die im Hauptkolben (14) zwischen der Endfläche, die der Kammer (36) der Aufnahme (12) zugewandt ist, und der Endfläche verläuft, die den Boden der vorstehend genannten Aussparung (17) darstellt, in der der zweite Kolben (15) aufgenommen ist, wodurch, wenn der Hauptkolben (14) in seiner herausragenden Stellung zur Anlage kommt, das Druckgas, das der Aufnahme (12) zugeführt wurde, durch die kalibrierte Leitung (33) in die Aussparung (17) gelangt, um den zweiten Kolben (15) in seine herausragende Stellung zu schieben.

4. Form nach Anspruch 3, **dadurch gekennzeichnet, dass** der zweite Kanal mehrere kalibrierte Leitungen (33) umfasst, die am äußeren Umfang des Hauptkolbens (14) verteilt sind.

5. Form nach einem der Ansprüche 1 bis 4, **dadurch gekennzeichnet, dass** die vordere Schubseite (16) des Hauptkolbens (14) zu einer Stirnplatte (26) gehört, die zentral liegt und von einem axialen Stift (21) gehalten wird, der fest mit dem Hauptkolben (14) verbunden ist, und dadurch, dass der zweite Kolben (15) mittig hohl (22) ist und den Stift (21) umgibt.

6. Form nach einem der Ansprüche 1 bis 5, **dadurch gekennzeichnet, dass** die Heizmittel dafür geeignet sind, den zweiten Kolben (15) zu erwärmen und mindestens eine elektrische Heizpatrone (25) umfassen, die in einer jeweiligen Bohrung (24) des zweiten Kolbens (15) untergebracht ist.

7. Form nach Anspruch 6, **dadurch gekennzeichnet, dass** die Heizmittel mehrere elektrische Heizpatronen (25) umfassen, die in jeweiligen Bohrungen (24), die am äußeren Umfang des zweiten Kolbens (15) verteilt sind, untergebracht sind.

8. Form nach einem der Ansprüche 1 bis 7, **dadurch gekennzeichnet, dass** zwischen dem Hauptkolben (14) und dem zweiten Kolben (15) ein Kühlgas eingeblasen wird, um die Temperatur des Hauptkolbens deutlich unter der Erweichungstemperatur des thermoplastischen Werkstoffs zu halten.

9. Form nach einem der Ansprüche 1 bis 8, **dadurch gekennzeichnet, dass** die Vorderseite (18) des zweiten Kolbens (15) als Messer geformt ist, das entlang des vorstehend genannten geschlossenen Umrisses verläuft.

10. Form nach einem der Ansprüche 2 bis 9, **dadurch gekennzeichnet, dass** die Mittel zum Zurückbewegen des Hauptkolbens (14) aus seiner herausragenden Stellung in seine zurückgezogene Stellung pneumatische Mittel sind, wobei der Hauptkolben (14) und seine Aufnahme (12) so gestaltet sind, dass sie einen doppeltwirkenden Zylinder darstellen.

11. Form nach einem der Ansprüche 2 bis 10, **dadurch gekennzeichnet, dass** die Mittel zum Zurückbewegen des zweiten Kolbens (15) mindestens eine Rückstellfeder (29) zwischen dem Hauptkolben (14) und dem zweiten Kolben (15) umfassen.

12. Sich drehende Formanlage zur Herstellung von Behältern aus einem thermoplastischen Werkstoff, die mit einem damit eine Einheit bildenden Griff versehen sind, durch Blasformen oder Streckblasen von erwärmten Vorformlingen, wobei die Anlage ein sich drehendes (40) Karussell (39) aufweist, das mit einer Mehrzahl von Formen (1) ausgestattet ist, die an seinem äußeren Umfang verteilt sind, **dadurch gekennzeichnet, dass** die Formen (1) nach einem der Ansprüche 1 bis 11 ausgelegt sind.

13. Feststehende Formanlage zur Herstellung von Behältern aus einem thermoplastischen Werkstoff, die mit einem damit eine Einheit bildenden Griff versehen sind, durch Blasformen oder Streckblasen von erwärmten Vorformlingen, wobei die Anlage mehrere Formen (1) aufweist, die im Wesentlichen in einer Reihe stationär gehalten werden, **dadurch gekennzeichnet, dass** die Formen (1) nach einem der Ansprüche 1 bis 11 ausgelegt sind.

14. Verfahren zur Herstellung, eines Behälters (2) aus einem thermoplastischen Werkstoff, insbesondere einem Polyolefin wie Polypropylen, der mit einem damit eine Einheit bildenden Griff (4) versehen ist, durch Blasformen oder Streckblasen eines erwärmten Vorformlings, mithilfe einer Form (1), die mindestens zwei Formhälften (5) umfasst, die
- beweglich zueinander sind,
- die jeweiligen Flächen (8) für den gegenseitigen Kontakt besitzen, die in der geschlossenen Stellung eine Verbindungsebene (9) definieren,
- die jeweils zwei Kavitäten (10) besitzen, die gemeinsam einen Formhohlraum (11) für den Körper (3) und die Schulter des endgültigen Behälters (2) definieren, und
- die jeweils zwei Aufnahmen (12) aufweisen, die ungefähr senkrecht zu den jeweiligen Kontaktflächen (8) verlaufen und in der geschlossenen Stellung der Form (1) in etwa nacheinander ausgerichtet sind und die zwei jeweiligen Einsätze (13) enthalten, die Kolben bilden, die sich pneumatisch zwischen
. einer zurückgezogenen Stellung, in der sich die beiden Einsätze (13) zumindest zum überwiegenden Teil in ihren jeweiligen Aufnahmen (12) befinden, und
. einer herausragenden Stellung bewegen, in der die beiden Einsätze (13) aufeinander zu geschoben sind, indem zwei bestimmte Wandbereiche (A) des Körpers (3) des Behälters so weit zusammengepresst werden, bis die beiden Wandbereiche (A) des Körpers (3) miteinander in Kontakt gebracht werden und nun miteinander unter Wärmeeinfluss verschweißt werden,
**dadurch gekennzeichnet, dass** jeder Einsatz (13) mit den beiden Kolben (14, 15) versehen wird, die teleskopartig ineinander stecken, das heißt einem Hauptkolben (14) oder Schubkolben, der eine vordere Schubseite (16) aufweist, die sich mittig befindet, und einem zweiter Kolben (15) oder Schweißkolben, der in dem Hauptkolben (14) aufgenommen ist, koaxial angeordnet ist und eine Vorderseite (18) aufweist, die die Vorderseite (16) des Hauptkolbens entlang einem geschlossenen Umriss umgibt, der sich mit dem Umfang des Wandbereichs (A) des Körpers des Behälters deckt,
dadurch, dass Heizmittel (25) vorgesehen werden, um zumindest für die Vorderseite (18) des zweiten Kolbens (15) die Erweichungstemperatur des thermoplastischen Werkstoffs aufrechtzuerhalten, und
dadurch, dass der Hauptkolben und der zweite Kolben (14, 15) derart ausgelegt werden, dass
- der Hauptkolben (14) in einer ersten Arbeitsphase aus seiner zurückgezogenen Stellung in seine herausragende Stellung gebracht wird, während der zweite Kolben (15) zurückgezogen im Hauptkolben gelassen wird, wobei die Vorderseite (16) des Hauptkolbens den bestimmten Wandbereich (A) des Körpers des Behälters wegschiebt, und
- der zweite Kolben (15) in einer zweiten Arbeitsphase aus seiner zurückgezogenen Stellung in seine herausragende Stellung relativ zum Hauptkolben (14) bewegt wird, sodass seine heiße Vorderseite (18) am Umfang des Wandbereichs (A) des Körpers des Behälters anliegt, um den Werkstoff dort zu erweichen, ihn am Umfang mit dem Wandabschnitt zu verschweißen, der von dem gegenüber befindlichen Kolben weggeschoben wurde, und den äußeren Umfang dieses Wandbereichs (A) zumindest vorzumarkieren.
